# EUROPÄISCHE PATENTSCHRIFT

(11) **EP 2 510 413 B1**
(45) Veröffentlichungstag und Bekanntmachung des Hinweises auf die Patenterteilung: **22.06.2016**
(21) Anmeldenummer: 10752769.9
(22) Anmeldetag: 03.09.2010
(51) Int. Cl.: G05D 23/275, H05B 1/02, A47J 27/62

(54) **VERFAHREN ZUR STEUERUNG EINES KOCHPROZESSES**
METHOD FOR CONTROLLING A COOKING PROCESS
PROCÉDÉ DE COMMANDE D'UN PROCESSUS DE CUISSON

(30) Priorität: 07.12.2009 DE 102009056980; 15.12.2009 DE 102009058172
(43) Veröffentlichungstag der Anmeldung: 17.10.2012
(73) Patentinhaber: MSX Technology AG, 9063 Stein (CH)
(72) Erfinder: SMRKE, Albin, 1230 Domzale (SI)
(74) Vertreter: Tilmann, Max Wilhelm
(86) Internationale Anmeldenummer: PCT/EP2010/062946
(87) Internationale Veröffentlichungsnummer: WO 2011/069695

(56) Entgegenhaltungen:
- DE-A1- 19 638 355
- US-A- 4 869 233
- US-A- 6 118 104
- US-B1- 6 236 025

## Beschreibung

Die Erfindung betrifft ein Verfahren zur Steuerung eines Kochprozesses eines in einem Kochgefäß enthaltenen Kochguts sowie ein System aus einem Kochgefäß, einem Sensor und einer Steuerungseinrichtung.

Verfahren zur automatisierten Steuerung von Kochprozessen und entsprechende Kochsysteme, beispielsweise bestehend aus einem Herd und einem darauf aufgesetzten Kochtopf, sind aus dem Stand der Technik bekannt.

In einer einfachen Ausführungsform ist ein solches Verfahren bzw. ein solches System aus dem Bereich der Wasserkocher bekannt. Diese autonom beheizten Kochgefäße, die ausschließlich zum Erhitzen von Wasser vorgesehen sind, sind in der Regel im Bereich des Deckels mit einem Bimetallschalter ausgestattet, der nach dem Erreichen des Siedepunkts von dem dann erheblich auftretenden Wasserdampf erwärmt wird und nach Erreichen einer bestimmten Temperatur durch eine dann ausreichende Verformung die Energiezufuhr zu dem Heizelement des Wasserkochers unterbricht, d.h. den Wasserkocher abschaltet. Da sich der Bimetallschalter jedoch nur langsam durch den Wasserdampf erwärmt, kocht bei diesen Wasserkochern das Wasser eine gewisse Zeit lang sprudelnd, bevor sich der Wasserkocher automatisch abschaltet. Dies ist grundsätzlich unnötig und verlängert nicht nur die Zeit, bis zu der der Nutzer warten muss, um auf das zum Sieden gebrachte Wasser zugreifen kann, sondern damit ist auch ein unnötiger Energiemehrverbrauch verbunden, der bei den meisten Wasserkochern bis zu 15% der gesamten für das Erhitzen des Wassers aufgebrachten Energie betragen kann.

Aus dem Stand der Technik sind auch Wasserkocher bekannt, die elektronische Temperatursensoren (insbesondere Halbleitersensoren) zur Ermittlung der Temperatur des Wassers verwenden. Zur Messung der Temperatur des Wassers ist es erforderlich, dass der Temperatursensor einen direkten Kontakt mit dem Wasser hat. Um sicherzustellen, dass dieser direkte Kontakt auch bei allen Füllhöhen des Wassers in dem Wasserkocher gegeben ist, ist zumeist vorgesehen, den Temperatursensor in den Boden des Wasserkochers zu integrieren. Dort befindet er sich jedoch regelmäßig in direkter Nachbarschaft zu den Heizelementen, die dessen Messwerte verfälschen. Es ist somit notwendig, von der gemessenen Temperatur auf die tatsächliche Temperatur des Wassers zu schließen, was mit einem gewissen Fehler behaftet ist.

Weiterhin sind aus dem Stand der Technik eine Vielzahl von Verfahren bekannt, die darauf abzielen, den Kochprozess auf einem Herd zur Speisenzubereitung zu überwachen und zu automatisieren.

Beispielsweise ist aus der DE 38 11 925 C1 eine Vorrichtung zum Regeln der Heizleistung einer Kochplatte bekannt, bei der in unmittelbarer Nähe zum Kochgefäß ein Temperaturfühler in die Kochplatte integriert ist. Mittels der durch den Temperaturfühler ermittelten Temperatur wird durch ein Ein- und Ausschalten des Heizelements der Kochplatte die Heizleistung geregelt. Problematisch an dieser Art der Heizregelung ist, dass die Siedetemperatur des Kochguts, dessen Hauptbestandteil Wasser ist, unter anderem vom Salzgehalt und dem lokalen Luftdruck abhängig ist, wobei schon geringe Schwankungen des Luftdrucks eine erhebliche Abweichung der Siedetemperatur bewirken. Diese Änderung der Seidetemperatur können mittels des Temperaturfühlers nicht berücksichtigt werden, so dass sich die aus der DE 38 11 925 C1 bekannte Vorrichtung nur bedingt für eine automatisierte Steuerung eines Kochvorgangs eignet.

Eine alternative Siedepunktregelung für Küchenherde ist aus der DE 31 46 638 A1 bekannt, bei der die Erfassung des Siedepunkts einer sich in einem Kochgefäß befindlichen Flüssigkeit mittels eines Körperschallsensors erfolgt, der z.B. unterhalb des Kochgefäßes angeordnet sein kann und den beim Sieden erzeugten Körperschall des Kochgefäßes ermittelt.

Aus der DE 196 38 355 C2 ist weiterhin ein Verfahren zur Ermittlung des Siedepunkts eines in einem Kochgefäß aufgenommenen Kochguts offenbart, das darauf beruht, mittels eines akustischen Sensors die während des Kochvorgangs emittierten Geräusche zu erfassen, auszuwerten und zur Steuerung der Energiezufuhr zu dem Kochgefäß heranzuziehen. Dabei wird das von dem akustischen Sensor aufgenommene Geräusch in einem komplizierten Verfahren analysiert, um sicherzustellen, dass der Siedepunkt unabhängig von der Art und der Größe des Kochgefäßes, der Verwendung oder Nicht-Verwendung eines Deckels, dem Füllstand und der Viskosität des Kochguts sowie der Art und Größe der Kochstelle ermittelt werden kann. Dabei ist vorgesehen, das beim Kochvorgang entstehende Geräusch in einen unteren, niederfrequenten und einen oberen, hochfrequenten Bereich aufzuteilen, wobei in jedem Bereich entweder für die gesamte Bandbreite, für mehrere Frequenzen oder für kleinere Frequenzbereiche aus dem Frequenzspektrum die Amplituden gemessen werden. Jeweils aus den Amplituden des unteren und des oberen Frequenzbereichs wird dann ein Mittelwert gebildet. Diese beiden Mittelwerte werden regelmäßig miteinander verglichen, wobei in der Phase des Blasensiedens der Mittelwert des unteren Frequenzbereichs unterhalb des Mittelwerts des oberen Frequenzbereichs liegt, während es sich in der Phase des sprudeinden Kochens genau umgekehrt verhält. Durch die frequenzselektive Analyse des Kochgeräuschs soll ermöglicht werden, in der Aufheizphase nach dem Zeitpunkt, in dem der Mittelwert des unteren Frequenzbereichs den Mittelwert des oberen Frequenzbereichs übersteigt, die Energiezufuhr für die Heizvorrichtung zu unterbrechen oder zu drosseln, während in der Abkühlphase nach dem Zeitpunkt, an dem der Mittelwert des oberen Frequenzbereichs den Mittelwert des unteren Frequenzbereichs übersteigt, die Energiezufuhr wieder aufgenommen oder erhöht wird. Diese frequenzselektive Analyse des von dem akustischen Sensor aufgenommenen Geräuschs erfordert eine relativ hohe Rechenleistung und somit entsprechend leistungsfähige Prozessoren, deren Integration in beispielsweise Wasserkochern einer geringen bis mittleren Preisklasse mit zu hohen Kosten verbunden ist.

US 6,236,025 B1 offenbart ein Verfahren zur Steuerung eines Kochprozesses eines in einem Kochgefäß enthaltenen Kochguts. Das Geräusch des Kochprozesses wird mittels mindestens eines akustischen Sensors erfasst und der Verlauf des Geräusche direkt zur Bestimmung der Temperatur des Kochguts ausgewertet. Es wird beschrieben, dass so genannten akustische Signaturen ("acoustic signatures") verwendet werden. Hinsichtlich dieser akustischen Signaturen wird ausgeführt, dass es akustische Signale in einem oder mehreren bestimmten Bereichen von Frequenzen gibt, die charakteristisch für das Aufheizen und Sieden von Wasser oder anderen Flüssigkeiten in einem Kochgefäß sind (vgl. D1, Spalte 2, Zellen 41 bis 44). US 6,236,025 B1 stellt damit auf spezielle "akustische Signaturen" ab, deren Kenntnis zunächst gewonnen werden muss.

US 6,118,104 A offenbart ein Verfahren zur Steuerung eines Kochprozesses eines in einem Kochgefäß enthaltenen Kochguts, wobei das von dem akustischen Sensor erfasste Signal geglättet und eine erste Ableitung des akustischen Signals berechnet wird. Der Siedepunkt wird dadurch ermittelt, dass die erste Ableitung des akustischen Signals ein Minimum aufweist, wobei das akustische Signal selbst einen mathematischen Wendepunkt aufweist.

US 4,869,233 A offenbart eine Vorrichtung und ein Verfahren zum akustischen Bestimmen verschiedener Zustände beim Heizen bzw. Sieden einer Flüssigkeit.

DE 3146638 A1 offenbart ein Verfahren zur Steuerung eines Kochprozesses, wobei das Geräusch des Kochprozesses mittels eines akustischen Sensors erfasst wird und der Verlauf des Geräuschs zur Bestimmung der Temperatur des Kochguts ausgewertet wird und der Kochprozess zusätzlich durch einen Temperatursensor überwacht wird.

Ausgehend von diesem Stand der Technik lag der Erfindung die Aufgabe zugrunde, ein vereinfachtes Verfahren zur Steuerung eines Kochprozesses eines in einem Kochgefäß enthaltenen Kochguts anzugeben. Weiterhin sollte ein für die Durchführung dieses Verfahrens geeignetes System angegeben werden.

Diese Aufgabe wird durch ein Verfahren gemäß dem unabhängigen Patentanspruch 1 sowie durch ein System gemäß dem unabhängigen Patentanspruch 9 gelöst. Vorteilhafte Ausführungsformen sind Gegenstand der jeweiligen abhängigen Patentansprüche und ergeben sich aus der nachfolgenden Beschreibung der Erfindung.

Der Erfindung liegt die Idee zugrunde, mittels eines akustischen Sensors den (Gesamt-)Geräuschpegel des Kochprozesses zu ermitteln und den Verlauf des Geräuschs über der Zeit direkt (d.h. ohne frequenzselektive Analyse) zur Bestimmung der Temperatur und insbesondere des Siedepunkts des Kochguts auszuwerten.

Der Erfinder hat festgestellt, dass durch eine Auswertung des Verlaufs des Geräuschs über der Zeit unter anderem der Siedepunkt des Kochguts exakt und ohne wesentliche zeitliche Verzögerung ermittelt werden kann. Dieser stellt sich nämlich bei einem geglätteten Verlauf des Gesamtgeräuschpegels über der Zeit als erster Tiefpunkt (d.h. der Verlauf geht von einer negativen Steigung in eine positive Steigung über) dar. Dieser liegt zeitlich nach einem ersten Hochpunkt (bei dem der Verlauf von einer positiven Steigung in eine negative Steigung übergeht). Der Gesamtgeräuschpegel steigt demnach relativ langsam bis zu dem ersten Hochpunkt und fällt danach wieder relativ langsam ab, bis zum Erreichen des Siedepunkts (erster Tiefpunkt). Dort erfolgt in einer zeitlich relativ kurzen Zeitspanne ein erneuter, starker Anstieg des Gesamtgeräuschpegels, der durch das Zerplatzen der sich in der Flüssigkeit des Kochguts bildenden Blasen an deren Oberfläche begründet ist. Durch eine weitere Auswertung des Verlaufs des Geräuschs können auch andere Temperaturen (insbesondere eine Temperatur von ca. 80°, die kurz nach dem Erreichen des ersten Hochpunkts erreicht wird) genau ermittelt werden. Aus diesen Temperaturen können dann auf alle weiteren Temperaturen geschlossen werden.

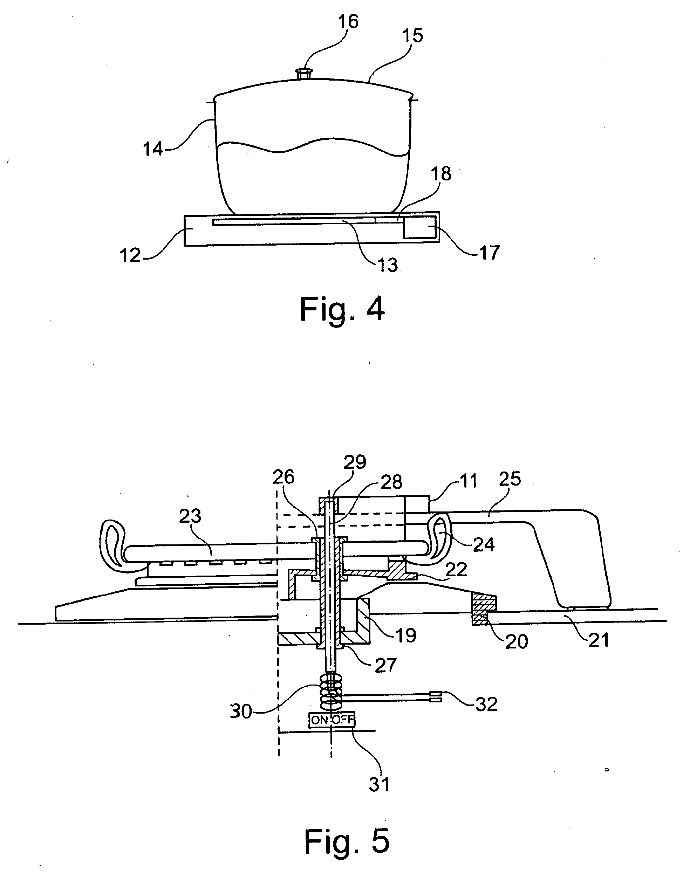

Eine Glättung des Verlaufs des gemessenen Geräuschs kann auf beliebige Art und Weise, beispielsweise durch eine zeitabhängige Mittelwertbildung erfolgen. Zusätzlich oder alternativ kann auch vorgesehen sein, z.B. einen bestimmten Zeitbereich, beispielsweise bis 20 Sekunden nach dem Anschalten des Wasserkochers nicht zu betrachten, der durch besonders große Messwertschwankungen gekennzeichnet ist (vgl. Fig. 4) und bei dem ausgeschlossen werden kann, dass das Kochgut schon eine relevante Temperatur und insbesondere den Siedepunkt erreicht hat. Als besonders geeignet hat sich herausgestellt, eine Glättung darüber vorzunehmen, indem beobachtet wird, welche Steigung und der nachfolgende Abfall in einer relativ kurzen Zeitspanne erfolgen. Diese können dann als Schwankung und nicht als zu ermittelnder Verlauf des Geräuschs identifiziert und bei der Ermittlung der Temperatur des Kochguts ausgeklammert werden.

Ein erfindungsgemäßes Verfahren zur Steuerung eines Kochprozesses eines in einem Kochgefäß enthaltenen Kochguts ist demnach dadurch gekennzeichnet, dass das Geräusch des Kochprozesses mittels mindestens eines akustischen Sensors erfasst und der Verlauf des Geräuschs über der Zeit direkt zur Bestimmung der Temperatur und insbesondere des Siedepunkts des Kochguts ausgewertet wird.

Unter einem "Verfahren zur Steuerung eines Kochprozesses" wird in der einfachsten Ausführungsform eine zumindest einmalige Ermittlung einer Temperatur und insbesondere des Siedepunkts des Kochguts verstanden. In komplexeren Ausführungsformen kann dieses Verfahren zusätzliche Verfahrensschritte, wie z.B. die automatisierte Steuerung einer Energiezufuhr zu dem Kochprozess beinhalten.

Das Geräusch des Kochprozesses kann erfindungsgemäß in Form seines Schalldrucks (in Pa) oder seiner Schallintensität (in W/m²) - oder einer davon abgeleiteten physikalischen Größe - gemessen und ausgewertet werden. Bevorzugt ist vorgesehen, für die Auswertung den (logarithmischen) Schalldruckpegel (in dB) heranzuziehen.

Unter einem "akustischen Sensor" sollen alle Sensoren verstanden werden, die das Geräusch des Kochprozesses messen und daraus ein Sensorsignal generieren können. Eine bevorzugte Ausführungsform eines für die Durchführung des erfindungsgemäßen Verfahrens geeigneten akustischen Sensors ist ein Mikrophon.

Unter "Kochgut" werden sämtliche Stoffe verstanden, die im Rahmen eines Kochprozesses gegebenenfalls bis zum Erreichen des Siedepunkts erwärmt werden sollen. Darunter fallen insbesondere Flüssigkeiten und im besonderen Maße Wasser wobei jedoch auch feste Stoffe Teil des Kochguts sein können. Da der erfindungsgemäße Kochprozess insbesondere die Zubereitung von Lebensmitteln umfasst, sollen insbesondere und ausdrücklich auch feste Lebensmittel, wie beispielsweise Gemüse, die sich auch nicht in einem Flüssigkeitsbad (insbesondere aus Wasser) befinden müssen, davon erfasst werden.

Ein entsprechendes erfindungsgemäßes System umfasst zumindest ein Kochgefäß zur Aufnahme eines Kochguts, zumindest einen akustischen Sensor zur Erfassung des (Gesamt-)Geräuschs eines Kochprozesses des Kochguts sowie zumindest eine Steuerungseinrichtung zur Bestimmung der Temperatur und insbesondere des Siedepunkts des Kochguts durch eine direkte Auswertung des Verlaufs des Geräuschs.

Die erfindungsgemäße Auswertung des Verlaufs des Geräuschs des Kochprozesses ermöglicht zusätzlich, auf einfache Weise die jeweilige Füllmenge-des Kochgefäßes zu bestimmen, da die Steigung bis zum Erreichen des ersten Hochpunkts von der Füllmenge des Kochgefäßes abhängig ist. Durch bereits zwei Messungen mit unterschiedlichen Füllständen eines Kochgefäßes und der Bestimmung des jeweils zugehörigen Verlaufs des Gesamtgeräuschpegels kann auf einfache Weise ein mathematischer Rückschluss auf den entsprechenden Verlauf anderer Füllstände desselben Kochgefäßes gezogen werden. Im Umkehrschluss kann daher ausgehend von einem konkreten Verlauf des Gesamtgeräuschpegels auf den jeweiligen Füllstand geschlossen werden.

In einer bevorzugten Ausführungsform des erfindungsgemäßen Verfahrens kann vorgesehen sein, zur Bestimmung des Geräuschs des Kochprozesses nur ein Frequenzspektrum des Gesamtgeräuschs heranzuziehen. Dadurch wird ermöglicht, einen Großteil der Störgeräusche, die nicht dem Kochprozess des Kochguts zuzuschreiben sind, herauszufiltern. Vorrichtungsseitig kann dies durch mindestens einen Frequenzfilter der Steuerungseinrichtung erfolgen.

Besonders bevorzugt kann vorgesehen sein, lediglich das Frequenzspektrum zwischen 500 Hz Und 3000 Hz zur Bestimmung des Gesamtgeräuschpegels heranzuziehen, das charakteristisch für das Erhitzen von Wasser bis zum Siedepunkt ist.

In einer vorteilhaften Ausführungsform der Erfindung kann vorgesehen sein, den Kochprozess zusätzlich durch mindestens einen Temperatursensor zu überwachen. Dies ermöglicht eine weitere Erhöhung der Genauigkeit, mit der bestimmte Prozessparameter des Kochprozesses und insbesondere der Siedepunkt des Kochguts bestimmt werden können. Die Kombination des erfindungsgemäßen akustischen Sensors mit mindestens einem zusätzlichen Temperatursensor ist insbesondere dann sinnvoll, wenn in dem Kochprozess ohne oder lediglich mit wenig Flüssigkeit (insbesondere Wasser) gekocht wird oder werden soll.

Sofern der Kochprozess die Zubereitung von Speisen umfasst, ist die zusätzliche Überwachung des Kochprozesses mittels mindestens eines Temperatursensors insbesondere für das Braten und Schmoren sinnvoll, da bei diesem Prozess kein Geräusch erzeugt wird, das die Charakteristika des Erreichens eines Siedepunkts einer Flüssigkeit aufweist.

Besonders bevorzugt kann vorgesehen sein, durch die Verbindung von mindestens zwei voneinander beabstandeten Temperatursensoren einen räumlichen Temperaturverlauf zu ermitteln und daraus - mittels bekannter mathematischer Methoden - ein Temperaturfeld zu bestimmen, aus dem die in dem Innenraum des Kochgefäßes herrschenden Temperaturen lokal bestimmt werden können. Vorzugsweise kann zumindest einer der zumindest zwei Temperatursensoren in einem Deckel des Kochgefäßes, in dem Boden des Kochgefäßes und/oder in einer Heizvorrichtung für die Zufuhr von Wärmeenergie in das Kochgefäß vorgesehen sein. Besonders bevorzugt sind zwei Temperatursensoren vorgesehen, von denen einer in dem Deckel des Kochgefäßes angeordnet und der andere in die Heizvorrichtung integriert ist, wobei ausgehend von der Heizvorrichtung die Temperatur im Boden des Kochgefäßes bestimmt wird.

Selbstverständlich ist auch eine andersartige Anordnung des oder der Temperatursensoren möglich, beispielsweise durch eine Integration eines Temperatursensors in eine Wand des Kochgefäßes oder deren Positionierung mittels eines Halteelements in dem Innenraum des Kochgefäßes.

Besonders bevorzugt kann vorgesehen sein, die Messwerte zumindest eines der Sensoren zur automatisierten Steuerung der Energiezufuhr des Kochprozesses heranzuziehen. Vorrichtungsseitig ist dann eine Regelungseinrichtung zur automatisierten Regelung der Heizleistung der Heizvorrichtung in Abhängigkeit von den Messwerten zumindest eines der Sensoren vorgesehen.

Vorzugsweise kann vorgesehen sein, die Messwerte als Eingangswert (bzw. als Eingangswertefunktion) einer Fuzzy-Logic-Regelung zuzuführen, die als Ausgangswert (bzw. als Ausgangswertefunktion) ein Steuerungssignal für die Energiezufuhr erzeugt.

Das erfindungsgemäße Verfahren und das erfindungsgemäße System eignen sich insbesondere für die Verwendung bei Kochprozessen, mit denen Speisen zubereitet werden. Es soll jedoch ausdrücklich darauf hingewiesen werden, das die Erfindung vorteilhaft bei jedem System zum Einsatz kommen kann, in dem eine Flüssigkeit insbesondere bis zum Erreichen eines Siedepunkts erwärmt wird und die Energiezufuhr für den Erwärmungsprozess gegebenenfalls automatisiert gesteuert wird. Beispielsweise ist eine Anwendung im Bereich von Wasserboilern oder sonstigen Öfen zur Erhitzung von Flüssigkeit (oder Feststoffen bis zur flüssigen Phase) möglich.

Die Erfindung wird nachfolgend anhand von in den Zeichnungen dargestellten Ausführungsbeispielen näher erläutert.

In den Zeichnungen zeigt:
- Fig. 1:: eine Ausführungsform eines erfindungsgemäßen Systems in Form eines Wasserkochers;
- Fig. 2:: einen Querschnitt durch einen Teil des Wasserkochers gemäß der Figur 1;
- Fig. 3:: ein Diagramm, in dem der zeitliche Verlauf der Wassertemperatur sowie des Geräuschs über der Zeit für verschiedene Füllstände des Wasserkochers gemäß der Figur 1 dargestellt sind;
- Fig. 4:: eine zweite Ausführungsform eines erfindungsgemäßen Systems in Form eines Kochtopfs auf einem elektrisch betriebenen Herd;
- Fig. 5:: eine Gaskochplatte zur Verwendung in einem System gemäß der Figur 4;
- Fig. 6:: in einer schematischen Darstellung die Funktionsweise einer auf Fuzzy-Logic basierenden Regelungseinrichtung eines System gemäß der Figur 4;
- Fig. 7:: in einem Diagramm eine erste Eingangswertfunktion für die Fuzzy-Logic-Regelung gemäß der Figur 6;
- Fig. 8:: in einem Diagramm eine zweite Eingangswertfunktion für die Fuzzy-Logic-Regelung gemäß der Figur 6;
- Fig. 9:: in einem Diagramm eine zweite dritte Eingangswertfunktion für die Fuzzy-Logic-Regelung gemäß der Figur 6;
- Fig. 10:: die Ausgangswertfunktion der Fuzzy-Logic-Regelung gemäß der Figur 6.

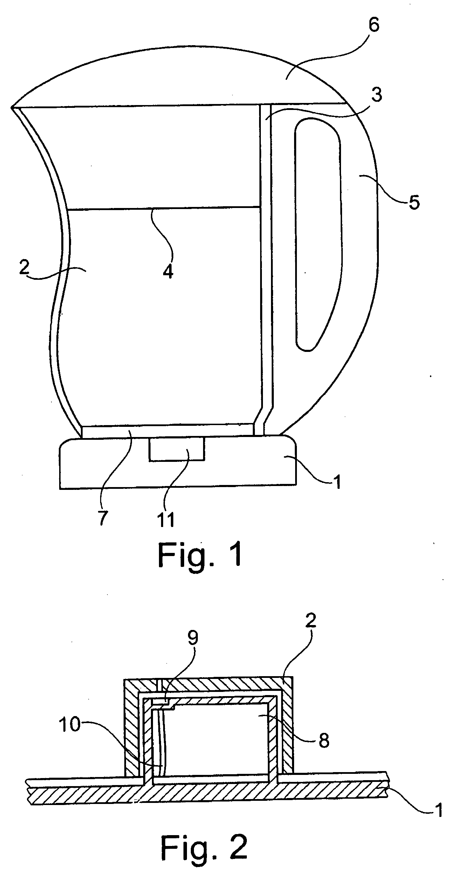

Die Figur 1 zeigt eine erste Ausführungsform eines erfindungsgemäßen Systems in Form eines Wasserkochers.

Der Wasserkocher besteht aus einem Unterteil 1 sowie einem hiermit lösbar verbundenen Oberteil 2. Das Oberteil 2 umfasst ein Gehäuse 3, in dem ein Füllraum 4 für Wasser vorgesehen ist, der von einem Benutzer des Wasserkochers mit Wasser in einer beliebigen Füllhöhe befüllt werden kann. Zur Handhabung des Oberteils 3 ist dieses mit einem Haltegriff 5 versehen. Ein Deckel 6 vermeidet durch ein Verschließen des Füllraums 4 einen unnötigen Energieverlust durch Entweichen von Dampf des aufheizenden Wassers. In dem Füllraum 3 oder in die diesen begrenzenden Wänden (insbesondere in den Boden 7) sind ein oder mehrere Heizelemente (nicht dargestellt) integriert, die zum Aufheizen des in dem Füllraum 4 enthaltenen Wassers mit einer elektrischen Spannung beaufschlagt werden. Die elektrische Spannung wird über einen elektrischen Steckkontakt zwischen dem Ober- 2 und dem Unterteil 1 des Wasserkochers hergestellt. Hierzu ist das Unterteil 1 des Wasserkochers mit einer häuslichen Stromversorgung (nicht dargestellt) verbunden.

Die Figur 2 zeigt einen Ausschnitt aus der Fig. 1 in einer geschnittenen Seitenansicht, die den elektrischen Steckkontakt zwischen dem Ober- 2 und dem Unterteil 1 des Wasserkochers abbildet. Zur Ausbildung des Steckkontakts weist das Unterteil 1 des Wasserkochers einen im Querschnitt kreisförmigen Sockel 8 auf, der in eine entsprechende Ausnehmung des Oberteils 2 des Wasserkochers eingreift. Über nicht dargestellte elektrische Kontaktelemente wird bei einem auf das Unterteil 1 des Wasserkochers aufgesteckten Oberteil ein elektrischer Kontakt zwischen dem oder den Heizelementen des Oberteils 2 des Wasserkochers und der häuslichen Stromversorgung hergestellt. Diese elektrische Verbindung kann zusätzlich über einen zum einen manuell betätigbaren und zum anderen von einer Steuerungseinrichtung des Wasserkochers beeinflussbaren Schalter unterbrochen (und auch wieder geschlossen) werden.

Der Wasserkocher gemäß der Figur 1 weist erfindungsgemäß einen akustischen Sensor in Form eines kleinen Mikrofons 9 auf, das in den Sockel 8 des Unterteils 1 integriert ist. Das Mikrofon 9 ist über elektrisch leitende Kabel 10 mit einer Steuerungseinrichtung 11 des Wasserkochers verbunden, die einen Mikroprozessor sowie einen Datenspeicher umfasst. In dem Datenspeicher ist ein Algorithmus einer Fuzzy-Logic-Regelung abgelegt, die mittels des Mikroprozessors ausgeführt werden kann, um die von dem Mikrofon 8 zu der Steuerungseinrichtung gesendeten Messwerte auszuwerten, um erfindungsgemäß die Temperatur und insbesondere den Siedepunkt des in dem Wasserkocher zu erwärmenden Wassers zu bestimmen. Eine Erfassung des Geräuschs mittels des Mikrofons 8 erfolgt dabei lediglich dann, wenn der Wasserkocher eingeschaltet ist, d.h. wenn Wasser in dem Wasserkocher erwärmt wird.

Selbstverständlich ist es auch möglich, das Mikrofon 8 an einer beliebigen anderen Stelle in den Wasserkocher zu integrieren.

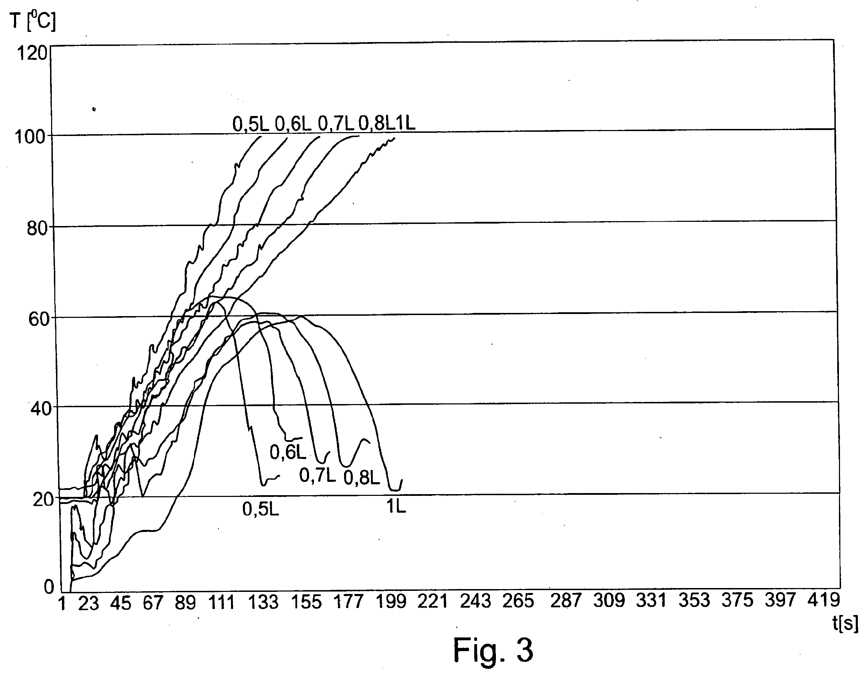

Die Figur 3 zeigt in einem Diagramm den Verlauf (über der Zeit) zum einen der Temperatur des Wassers in dem Oberteil 2 des Wasserkochers und zum anderen das von dem Mikrofon 8 aufgenommene und insbesondere von dem Erhitzen des Wassers beeinflusste Geräusch für verschiedene Füllstände (0,5 l, 0,6, 0,7 l, 0,8 l und 1 l) des Wasserkochers. Da der Wasserkocher mittels des Schalters lediglich ein und aus und somit zwischen einer Null- und einer maximalen Heizleistung geschaltet werden kann, verläuft die Erhöhung der Temperatur über der Zeit weitgehend linear. Eine größere Füllmenge des Wasserkochers führt dabei zu einer geringeren Steigung des Temperaturverlaufs und folglich zu einer längeren Zeitdauer bis zum Erreichen der Siedetemperatur bei ca. 100°C.

Anhand des Verlaufs des Geräuschs kann mit sehr hoher Genauigkeit und ohne wesentliche zeitliche Verzögerung das Erreichen des Siedepunkts des in dem Wasserkocher enthaltenen Wassers bestimmt werden. Der Verlauf des Geräuschs zeigt zunächst einen starken Anstieg bis zu einer Temperatur von ca. 50 °C des Wassers, der dann in einen langsameren Anstieg übergeht. Bei einer Wassertemperatur von ca. 80 °C wird ein absoluter Maximalwert des Geräuschs erreicht. Nach Erreichen dieses Maximalwerts (der durch einen entsprechenden ersten Hochpunkt des geglätteten Verlaufs gekennzeichnet ist) fällt das Geräusch zunächst schwach dann zunehmend stärker ab, bis zum Erreichen des Siedepunkts. Nach dem Erreichen des Siedepunkts erfolgt in einem relativ kurzen Zeitraum ein erneuter Anstieg des Geräuschs. Dieser starke Anstieg des Geräuschs ist durch das dann sprudelnde Kochen des siedenden Wassers mit an der Wasseroberfläche zerplatzenden Gasblasen begründet. Der durch den recht plötzlichen erneuten Anstieg des Geräuschs erzeugte Tiefpunkt des Geräuschverlaufs kann von der Steuerungseinheit mit relativ geringer zeitlicher Verzögerung erkannt werden und daraus die Information abgeleitet werden, dass der Siedepunkt des in dem Wasserkocher zu erhitzenden Wassers erreicht ist. Von einer Regelungseinrichtung der Steuerungseinrichtung kann dann ein Signal erzeugt werden, das zu einem Ausschalten des Wasserkochers führt.

Das den bevorstehenden Siedepunkt ankündigende, zischende Geräusch entsteht durch lokales Überschreiten des temperaturabhängigen Dampfdrucks an den Heizelementen des Wasserkochers, resultierend aus örtlich an Blasenkeimen ausgelösten, kleinen Siedeverzügen (stärkstes Geräusch). Kurze Zeit später ändert sich das Geräusch beim Übergang zu einem sprudelnden Kochen, wenn also die Dampfblasen von den Heizspiralen abreißen, in dem Wasser aufsteigen und an der Wasseroberfläche zerplatzen.

Selbstverständlich ist auch eine Ausführungsform des Wasserkochers möglich, bei der die Energiezufuhr nach dem Erreichen des Siedepunkts nicht (dauerhaft) unterbrochen wird, sondern die Steuerungseinrichtung - gegebenenfalls aufgrund einer manuellen Vorwahl durch den Nutzer - die Energiezufuhr so regelt, dass der Kochzustand (z.B. der Siedepunkt) mit reduzierter Energiezufuhr aufrecht gehalten wird. Dies kann sowohl durch eine Verringerung der Leistung der Heizvorrichtung als auch beispielsweise durch ein periodisches Ein- und Ausschalten der Energiezufuhr zu der Heizvorrichtung erfolgen.

Die Figur 4 zeigt eine zweite Ausführungsform eines erfindungsgemäßen Systems in Form einer Kochstelle 12 mit einer elektrischen Kochplatte 13 und eines darauf angeordneten Kochtopfs 14 mit einem Deckel 15. Die elektrische Kochplatte 13 kann in einen Kochherd mit mehreren Kochstellen integriert sein. Ein Kochgut wird in dem Kochtopf zubereitet. Der Kochtopf kann in unterschiedlichen Abmessungen und auf die Kochstelle aufsetzbar ausgebildet sein, wie dies in häuslichen Küchen üblich ist, oder er kann fest auf der Kochstelle angeordnet oder in diese integriert sein, wie dies in professionellen Küchen üblich ist. Die elektrische Kochplatte kann als elektrisch beheizte Kochplatte oder als Induktionskochplatte ausgebildet sein. Anstelle einer elektrischen Kochplatte 13 kann auch eine mit Gas (vgl. Fig. 5) oder Dampf betriebene Kochplatte zum Einsatz kommen.

Handelt es sich um einen Kochherd mit mehreren Kochstellen, kann jede Kochstelle einen Sensor für die Anwesenheit oder Abwesenheit eines Kochtopfs oder eines sonstigen Kochgeschirrs aufweisen, der beispielsweise als Induktionsschleife ausgebildet sein kann, deren Induktivität sich ändert, je nachdem ob ein Kochgeschirr auf der Kochstelle aufgesetzt ist oder nicht.

Das System weist erfindungsgemäß einen akustischen Sensor 16 zur Erfassung des beim Kochen auftretenden Geräuschs auf. Der akustische Sensor ist Teil einer integrierten Sensoreinheit. In diesem Ausführungsbeispiel ist die Sensoreinheit in den Haltegriff 16 des Deckels integriert. Alternative Ausführungsformen können vorsehen, die Sensoreinheit oder auch nur den akustischen Sensor beispielsweise in die Wand des Kochtopfs oder in die Kochplatte bzw. Kochstelle zu integrieren. Weiterhin besteht die Möglichkeit, den akustischen Sensor in einer Sensoreinheit vorzusehen, die lösbar an dem Kochtopf befestigt werden kann. Dies ermöglicht, die Sensoreinheit mit beliebigen Kochtöpfen bzw. anderem Kochgeschirr zu verwenden und dieses Kochgeschirr erfindungsgemäß nachzurüsten. Die lösbare Sensoreinheit muss dabei nur an einer geeigneten Stelle mit dem Kochgeschirr verbunden werden. Dies kann vorzugsweise magnetisch erfolgen.

Die Erfassung und Auswertung des während des Kochens eines in dem Topf enthaltenen flüssigen Kochguts erfolgt auf identische Art und Weise, wie dies für das erste Ausführungsbeispiel anhand der Fig. 1 bis 3 beschrieben ist.

Die Messwerte werden von dem Sensor kabellos an eine in die Kochstelle integrierte Steuerungseinrichtung 17 gesendet. Dies erfolgt mittels einer ebenfalls in die Sensoreinheit integrierten Übertragungseinheit, bei der es sich um eine marktübliche Übertragungseinheit handeln kann, die Daten mittels elektromagnetischer Wellen beispielsweise im Bereich von 2,4 GHz aussenden kann. Die Messwerte werden von einer Empfangseinheit 18 der Steuerungseinheit empfangen und dann mittels eines Mikroprozessors ausgewertet. Hierbei dienen die Messwerte als Eingangswerte einer Fuzzy-Logic-Regelung, die einen Ausgangswert erzeugt, der einer Regelungseinrichtung der Steuerungseinrichtung zugeführt wird, die anhand des Ausgangswerts eine automatisierte Regelung der Energiezufuhr zu der Kochplatte vornimmt.

Während die Regelung bei dem Ausführungsbeispiel gemäß den Fig. 1 bis 3 relativ einfach sein kann, nämlich lediglich ein Ausschalten des Wasserkochers beim Erreichen der Siedetemperatur vorsehen kann, ist die Regelung des Systems gemäß der Fig. 4 vorzugsweise komplexer ausgebildet. Beim Kochen in einem Topf werden nämlich in der Regel Speisen zubereitet, deren Kochprozess komplexer ist. So kann das Zubereiten von Speisen beispielsweise das Aufheizen von Wasser oder einer anderen Flüssigkeit bis zu dem Siedepunkt und das sich anschließende Weiterkochen mit siedender oder köchelnder (Simmerphase) Flüssigkeit umfassen. Dabei kann sich das feste Kochgut bereits während der Aufheizphase in der Flüssigkeit befinden oder erst später, z.B. nach dem Erreichen des Siedepunkts in die Flüssigkeit eingebracht werden.

Da Kochprozesse insbesondere aufgrund der Verwendung unterschiedlicher Kochgüter stets anders sind (z.B. Kochen mit viel oder mit wenig Flüssigkeit (Wasser), Schmoren oder Braten, Halten einer bestimmten relativ niedrigen Temperatur zum Auftauen von gefrorenen Lebensmitteln, Kochen oder Frittieren mit einer Temperatur über 100° C), können in dem erfindungsgemäßen System noch andere Sensoren vorgesehen sein, wie zum Beispiel einer oder mehrere Temperatursensoren, Feuchtigkeitssensoren, Rauchsensoren, Drucksensoren oder Bewegungssensoren (zur Erfassung der Bewegung des Kochguts und/oder des Kochgeschirrs). Dadurch wird ermöglicht, die Energiezufuhr noch exakter zu steuern und insbesondere auch andere Kochzustände und andere Arten des Kochens als mit Wasser auszuwerten und automatisiert steuern.

Bei dem in der Fig. 4 dargestellten Ausführungsbeispiel sind neben dem akustischen Sensor noch zwei Temperatursensoren vorgesehen, von denen ein erster in den Topf und konkret in die Sensoreinheit in dem Griff des Deckels und ein zweiter in die Kochstelle integriert ist (eine Alternative kann auch die Integration dieses zweiten Temperatursensors in den Boden des Topfs vorsehen).

Bei elektrisch beheizten Kochplatten kann der zweite Sensor beispielsweise zwischen den Heizwiderständen und der diese abdeckenden Glaskeramikplatte angeordnet sein und kann ein flaches keramisches Substrat mit Widerstandsmasse aufweisen. Bei Induktionskochplatten kann der üblicherweise ohnehin vorgesehene Temperatursensor verwendet werden.

Beide Sensoren übermitteln ihre Messwerte ebenfalls an die Steuerungseinrichtung, wobei der erste Temperatursensor hierzu auf die kabellose Übertragungseinheit der Sensoreinheit zurückgreifen kann, während für den zweiten, in die Kochstelle integrierten Temperatursensor eine Kabelverbindung sinnvoll einsetzbar ist.

Der zweite Temperatursensor dient dazu, die Temperatur im Bereich des Bodens des Kochtopfs zu bestimmen, aus der sich bereits die Temperaturverteilung (Temperaturfeld) in dem Kochgeschirr in guter Näherung ableiten lässt. Noch genauer kann das Temperaturfeld in dem Kochgeschirr ermittelt werden, wenn die Messwerte der beiden Temperatursensoren gemeinsam ausgewertet werden. Eine weitere Verbesserung kann erreicht werden, wenn zusätzlich noch die Messwerte des akustischen Sensors zur Ermittlung des Temperaturfelds ausgewertet werden. All dies erfolgt mittels der Steuerungseinrichtung anhand der darin abgespeicherten Fuzzy-Logic-Regelung.

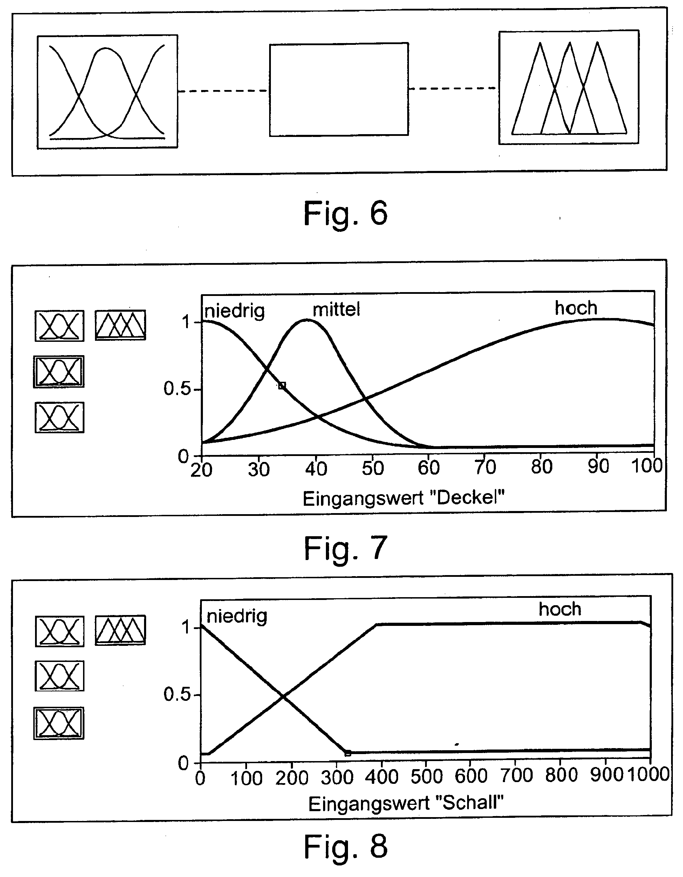

Die Fig. 6 bis 10 zeigen Prinzipskizzen und Diagramme zur Veranschaulichung der grundsätzlichen Funktionsweise der bei dem System gemäß der Fig. 4 zum Einsatz kommenden Fuzzy-Logic-Regelung.

Die Fuzzy-Logic-Regelung erzeugt ausgehend von den Messwerten der drei Sensoren (Eingangswerte) eine Ausgangswertefunktion, der der Regelungseinrichtung des Systems zugeführt wird, um die Energiezufuhr zu dem Kochprozess automatisiert zu steuern (Fig. 6). Eingangswerte sind demnach die von den Sensoren gemessenen Ternperaturen am Deckel des Topfs und im Bereich der elektrischen Heizspiralen sowie das Geräusch.

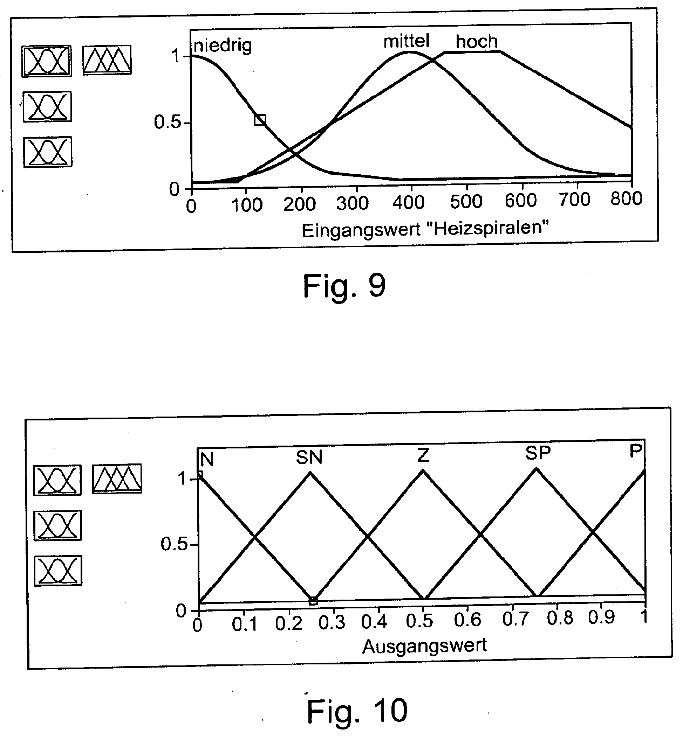

Die Fig. 7 bis 9 zeigen die der Fuzzy-Logic-Regelung zugrunde liegenden und in der Speichereinrichtung der Steuereinrichtung abgelegten Fuzzy-Funktionen für die drei Eingangswerte. Für die temperaturabhängigen Fuzzy-Funktionen (Fig. 7: Temperatur im Deckel und Fig. 9: Temperatur im Bereich der Heizspiralen) wurden drei Modifikatoren ausgewählt, anhand derer der für das Kochen unscharfe Begriff "heiß" mathematisch dargestellt werden kann: niedrig, mittel und hoch. Diese Modifikatoren sind in den Diagrammen in Form jeweils einer Gauß'schen Verteilung mit unterschiedlicher Spreizung über der Temperatur dargestellt. Lediglich für den Modifikator der "hohen" Temperatur der Heizspiralen wird über eine alternative (trapezförmige) Funktion mit einem konstanten Eingangsbereich, einem darauffolgenden linearen Anstieg, einem zweiten linearen Bereich und einem dann folgenden linearen Abstieg gewichtet.

Der Verlauf der Modifikatoren der geräuschabhängigen Fuzzy-Funktion (Fig. 8) ist ab einem Wert von ca. 350 konstant. Zwischen Null und diesem Wert ist der Anstieg (Modifikator "hoch") bzw. der Abfall (Modifikator "niedrig") linear.

Die Fig. 10 zeigt die von der Fuzzy-Logic-Regelung anhand der Eingangswerte-Funktionen ermittelte Ausgangswerte-Funktion. Für diese Ausgangswerte-Funktion wurden insgesamt fünf Modifikatoren gewählt: N: negativ; SN: schwach negativ; Z: Null; SP: schwach positiv; und P: positiv. Der N-Modifikator zeigt einen zunächst linear abfallenden Verlauf, der dann bei konstant verläuft. Der Verlauf des P-Modifikators ist entsprechend umgekehrt: zunächst konstant, dann linear ansteigend. Die Verläufe der SN-, Z- und SP-Modifikatoren wurden dreieckig, d.h. linear ansteigend und dann linear abfallend gewählt.

Eine zeitliche Analyse des Temperaturfeldes erlaubt es, die Energie zu berechnen, die durch die Heizquelle an den Kochtopf abgegeben werden soll, um ein bedarfsgerechtes Erhitzen und Weiterkochen des Kochguts zu erreichen.

Ein durch das erfindungsgemäße Verfahren automatisierter Kochprozess kann in zwei Phasen ablaufen, nämlich einer (ggf. automatisierten) Aufheizphase und einer automatisierten Weiterkochphase. Während beider Phasen erfolgt eine Analyse des Kochprozesses mit dem Ziel der automatisierten Beeinflussung.

Die Aufheizphase beginnt, wenn der Kochtopf mit einer zuzubereitenden Speise auf die Kochplatte gestellt und der Kochherd eingeschaltet wird. Dies kann manuell oder auch mittels einer Zeitschaltuhr gesteuert erfolgen. Die Aufheizphase kann andauern, bis ein definiertes Temperaturfeld im Kochtopf erreicht ist. Während der automatisierten Weiterkochphase wird die Energiezufuhr von der Regelungseinrichtung in möglichst optimaler Weise geregelt. Die Weiterkochphase kann solange andauern, bis eine durch eine Bedienperson der Kochstelle vorgegebene Kochzeit beendet ist und die Energiezufuhr automatisch oder manuell unterbrochen wird.

Da es in der Praxis sehr viele unterschiedliche Kochprozesse gibt, ist es schwierig, diese allein über eine Analyse der Messwerte der Sensoren zu steuern. Aus diesem Grunde besteht für die Bedienperson die Möglichkeit über eine Eingabevorrichtung verschiedene Basiskochprozesse einzugeben. Im vorliegenden Fall sind folgende Vorauswahl-Eingaben möglich: 1. Kochen mit viel Wasser, 2. Kochen mit wenig Wasser, 3. Schmoren, 4. Braten, 5. Aufrechterhalten einer einstellbaren Temperatur, 5. Kochen mit einem von der Bedienperson ausgewählten (und in der Steuerungseinrichtung näher definierten) Kochprozess (Auswahl über Untermenü).

Das Kochen mit viel Wasser ist ein häufiger Kochprozess. Hier dient als Regelbasis das Sieden. Zumeist handelt es sich hierbei um das Kochen von Suppen oder von Gemüse in einem Wasserbad. Das Kochen wird durch eine Auswertung des Temperaturfelds und des Gesamtgeräuschpegels geregelt. Der Temperatursensor, der die Temperatur des Bodens des Kochgeschirrs ermittelt, kann zusätzlich dazu dienen ein vollständiges Verdampfen des Wasser und einer sich dadurch stark erhöhenden Temperatur zu detektieren, so dass durch eine automatisierte Reduzierung der Energiezufuhr bis hin zur vollständigen Unterbrechung ein Anbrennen des Kochguts und eine Beschädigung des Kochgeschirrs vermieden werden kann. Gegebenenfalls kann zusätzlich durch ein akustisches und/oder optisches Warnsignal eine Benachrichtigung der Bedienperson erfolgen.

Beim Kochen mit wenig Wasser, wie dies insbesondere zum Dampfgaren von Gemüse durchgeführt wird, um Mineralien und Vitamine zu erhalten, kann die zugeführte Energie sehr genau in Abhängigkeit von (nur) dem Temperaturfeld geregelt, da es sich hierbei im wesentlichen um ein Kochen mit Dampf handelt. Der akustische Sensor kann in diesem Fall als Sicherheitselement dienen, um beispielsweise den Zeitpunkt zu ermitteln, bei dem das Wasser im Kochtopf vollständig verdampft ist, was sich durch ein verändertes bzw. fehlendes "Kochgeräusch" bemerkbar macht.

Wenn geschmort oder gebraten wird, soll die Energie in der Weise zugeführt werden, dass der Boden des Kochgeschirrs (insbesondere eines Schmortopfs oder einer Bratpfanne (mit oder ohne Deckel)) schnellstmöglich auf die jeweils erforderliche Temperatur aufgeheizt wird. Dann kann ein akustisches Signal abgegeben werden, um die Bedienperson über das Erreichen der Temperatur zu informieren, so dass diese gegebenenfalls das Schmor- oder Bratgut in das Kochgeschirr geben kann. Danach wird automatisiert nur noch die Energie zugeführt, die zum (Weiter-)Schmoren oder (Weiter-)Braten erforderlich ist.

Um beispielsweise Schokolade zu schmelzen, Milch zu kochen oder tief gefrorene Lebensmittel aufzutauen, wofür eine bestimmte, unter der Siedetemperatur vom Wasser liegende Temperatur erforderlich ist, kann die Bedienperson die jeweilige Temperatur oder den jeweiligen Kochprozess über die Eingabevorrichtung eingeben bzw. auswählen.

Weiterhin kann vorgesehen sein, über die Eingabevorrichtung ein besonderes Kochgeschirr auszuwählen, das die Steuerungseinrichtung mit einem entsprechenden Kochprogramm verknüpft hat. Dies kann sich beispielsweise für Druckkochtöpfe vorgesehen sein, für die ein Energiezufuhrprogramm vorhanden ist, das auf Druck- und/oder Dampfsensoren beruht. Besondere Kochbehälter sind auch Frittiergeräte zum Frittieren mit Öl, Woks oder andere typische Kochgeräte für das Zubereiten besonderer Lebensmittel. Dieses Vorwählen des Kochgeschirrs kann auch automatisch erfolgen, sofern beispielsweise das Kochgeschirr ein entsprechendes Erkennungssignal an die Steuerungseinrichtung.

Die Fig. 5 zeigt eine Möglichkeit zur Integration eines Temperatursensors in ein Gaskochfeld. Ein solches Gaskochfeld kann - anstelle des elektrisch beheizten Kochfelds - beispielsweise in einem System gemäß der Fig. 4 zum Einsatz kommen.

Der Brenner des Gaskochfelds umfasst ein Gehäuse 19, das über ein Trägerelement 20 an einer Glaskeramikplatte 21 eines Küchenherds befestigt ist. Am Gehäuse 19 des Brenners sind ein Brennerunterteil 22 und ein Brenneroberteil 23 angeordnet, durch die in nicht dargestellter Weise ein Gas und Verbrennungsluft geleitet wird. Die Flammen 24 des verbrennenden Gases treten aus Öffnungen zwischen dem Brennerunterteil 22 und dem Brenneroberteil 23 aus. Oberhalb des Brenneroberteils 23 ist ein auf der Glaskeramikplatte 21 ruhender Untersatz 25 angeordnet, auf den sich Kochgeschirr aufsetzen lässt. Eine Führung 26 ist abgedichtet zwischen dem Brennerunterteil 22 und dem Brenneroberteil 23 angeordnet, durch die eine weitere Führung 27 geführt ist, die bis zum Gehäuse 19 reicht und daran befestigt ist. Diese Führung 27 nimmt einen Sensorträgerstift 28 auf, der an seinem aus dem Brenneroberteil 23 herausragenden Ende einen Temperatursensor 29 aufweist. Von dem Sensorträgerstift 28 geführt kann sich der Temperatursensor 29 auf und ab bewegen, wobei der Sensorträgerstift 28 durch eine Feder 30 in die obere, dargestellte Stellung bewegt wird, in der ein Schalter 31 geöffnet ist. Wird Kochgeschirr auf den Untersatz 25 aufgesetzt, bewegt sich der Temperatursensor 29 mit dem Sensorträgerstift 28 nach unten und schließt den Schalter 31. Hierdurch gelangt ein Signal an die Steuerungseinrichtung 17 des Systems, das die Anwesenheit eines Kochgeschirrs auf dem Untersatz anzeigt. Der Temperatursensor 29 und der Schalter 31 sind über Kabel 32 mit der Steuerungseinrichtung 17 verbunden.

Sobald die Steuerungseinrichtung 17 das Signal erhält, dass ein Kochgeschirr auf dem Kochfeld platziert ist, wird die Gaszufuhr freigegeben und das austretende Gas gegebenenfalls automatisch gezündet. In Abhängigkeit u.a. von dem zuvor ausgewählten Basiskochprogramm erfolgt - in Verbindung mit den Messwerten der anderen Sensoren - eine dann automatische Regelung der Gaszufuhr in Abhängigkeit von der Art und dem Fortschritt des jeweiligen Kochprozesses

Wird das Kochgeschirr von dem Gaskochfeld entfernt, wird entweder die Gaszufuhr automatisch vollständig unterbrochen oder soweit herunter geregelt, dass nur noch eine (möglichst kleine) Stand-by-Flamme brennt, die ein schnelleres Starten des Gaskochfelds beim erneuten Aufsetzen des Kochgeschirrs ermöglicht.

## Patentansprüche

1. Verfahren zur Steuerung eines Kochprozesses eines in einem Kochgefäß enthaltenen Kochguts, wobei das Geräusch des Kochprozesses mittels mindestens eines akustischen Sensors erfasst und der Verlauf des Geräuschs direkt zur Bestimmung der Temperatur des Kochguts und/oder als Sicherheitselement ausgewertet wird, wobei der Kochprozess zusätzlich durch mindestens einen Temperatursensor überwacht wird, **dadurch gekennzeichnet, dass** durch die Verwendung von mindestens zwei voneinander beabstandeten Temperatursensoren ein räumlicher Temperaturverlauf ermittelt und daraus ein Temperaturfeld für den Innenraum des Kochgefäßes ermittelt wird.

2. Verfahren gemäß Anspruch 1, **dadurch gekennzeichnet, dass** der Siedepunkt des Kochguts bestimmt wird, indem bei einem geglätteten Verlauf des Geräuschs über der Zeit das Erreichen eines ersten Tiefpunkts ermittelt wird.

3. Verfahren gemäß Anspruch 1 oder 2, **dadurch gekennzeichnet, dass** ausgehend von einer gemittelten Steigung bis zum Erreichen eines ersten Hochpunkts die Füllmenge des Kochgefäßes bestimmt wird.

4. Verfahren gemäß einem der vorhergehenden Ansprüche, **dadurch gekennzeichnet, dass** zur Bestimmung des Geräuschs des Kochprozesses nur ein Frequenzspektrum des Gesamtgeräuschs herangezogen wird.

5. Verfahren gemäß Anspruch 4, **dadurch gekennzeichnet, dass** das Frequenzspektrum zwischen 500Hz und 3000Hz liegt.

6. Verfahren gemäß Ansprüche 1 bis 5, **dadurch gekennzeichnet, dass** die Temperaturen im Bereich eines Bodens und eines Deckels (15) des Kochgefäßes ermittelt werden.

7. Verfahren gemäß einem der vorhergehenden Ansprüche, **dadurch gekennzeichnet, dass** die Messwerte zumindest eines der Sensoren zur automatisierten Steuerung der Energiezufuhr des Kochprozesses herangezogen werden.

8. Verfahren gemäß Anspruch 7, **dadurch gekennzeichnet, dass** die Messwerte als Eingangswert einer Fuzzy-Logic-Regelung zugeführt werden, die als Ausgangswert ein Steuerungssignal für die Energiezufuhr erzeugt.

9. System aus
- einem Kochgefäß zur Aufnahme eines Kochguts,
- einem akustischen Sensor zur Erfassung des Geräuschs eines Kochprozesses des Kochguts
- sowie einer Steuerungseinrichtung (11; 17) zur Bestimmung einer Temperatur des Kochguts und/oder zum Überwachen des akustischen Sensors als Sicherheitselement durch eine direkte Auswertung des Verlaufs des Geräuschs, **gekennzeichnet durch** mindestens zwei voneinander beabstandete Temperatursensoren, wobei die Steuerungseinrichtung (11; 17) derart ausgestaltet ist, dass mittels der Temperatursensoren ein räumlicher Temperaturverlauf und daraus ein Temperaturfeld für den Innenraum des Kochgefäßes ermittelbar ist.

10. System gemäß Anspruch 9, **dadurch gekennzeichnet, dass** die Steuerungseinrichtung mindestens einen Frequenzfilter aufweist, durch den zumindest ein Frequenzspektrum des Gesamtgeräuschs herausgefiltert wird.

11. System gemäß Anspruch 9 oder 10, **dadurch gekennzeichnet, dass** mindestens ein Temperatursensor zur Bestimmung der Temperatur im Bereich des Kochguts und/oder des Kochgefäßes angeordnet ist.

12. System gemäß einem der Ansprüche 9 bis 11, **gekennzeichnet durch** eine Heizvorrichtung für die Zufuhr von Wärmeenergie in das Kochgefäß.

13. System gemäß einem der Ansprüche 9 bis 12, **gekennzeichnet durch** die Anordnung eines Temperatursensors in einem Deckel (15) des Kochgefäßes, in dem Boden des Kochgefäßes und/oder in der Heizvorrichtung.

14. System gemäß eines der Ansprüche 9 bis 13, **gekennzeichnet durch** eine Regelungseinrichtung zur automatisierten Regelung der Heizleistung der Heizvorrichtung in Abhängigkeit von den Messwerten eines der Sensoren.

## Claims

1. Method for controlling a cooking process of a food for cooking contained in a cooking vessel, wherein the sound of the cooking process is registered by means of at least one acoustic sensor, and the characteristic of the sound is evaluated directly in order to determine the temperature of the food for cooking and/or as a safety element, wherein the cooking process is additionally monitored by at least one temperature sensor, **characterised in that,** through the use of at least two temperature sensors distanced from one another, a spatial temperature characteristic is determined and, from this, a temperature field for the interior space of the cooking vessel is determined.

2. Method according to claim 1, **characterised in that** the boiling point of the food for cooking is determined **in that**, in the case of a smoothed characteristic of the sound over time, the reaching of a first minimum is detected.

3. Method according to claim 1 or 2, **characterised in that,** starting from an averaged increase up to the reaching of a first maximum, the filled level of the cooking vessel is determined.

4. Method according to one of the preceding claims **characterised in that,** in order to determine the sound of the cooking process, only one frequency spectrum of the total sound is used.

5. Method according to claim 4, **characterised in that** the frequency spectrum is disposed between 500 Hz and 3000 Hz.

6. Method according to claims 1 to 5, **characterised in that** the temperatures in the region of a base and a lid (15) of the cooking vessel are determined.

7. Method according to one of the preceding claims, **characterised in that** the measured values of at least one of the sensors are used for the automatic control of the energy supply of the cooking process.

8. Method according to claim 7, **characterised in that** the measured values are supplied as input-value to a fuzzy-logic control, which generates as output-value a control signal for the energy supply.

9. System comprising
- a cooking vessel for retaining a food for cooking,
- an acoustic sensor for detecting the sound of a cooking process of the food for cooking
- and a control device (11; 17) for determining a temperature of the food for cooking and/or for monitoring the acoustic sensor as security element through a direct evaluation of the characteristic of the sound, **characterised by** at least two mutually distanced temperature sensors, wherein the control device (11; 17) is constituted in such a manner that, by means of the temperature sensors, a spatial temperature characteristic can be determined and, from the latter, a temperature field for the interior space of the cooking vessel.

10. System according to claim 9, **characterised in that** the control device comprises at least one frequency filter through which at least one frequency spectrum of the total sound is filtered out.

11. System according to claim 9 or 10, **characterised in that** at least one temperature sensor is arranged in the region of the food for cooking and/or of the cooking vessel for the determination of the temperature.

12. System according to any one of claims 9 to 11, **characterised by** a heating device for the supply of thermal energy into the cooking vessel.

13. System according to any one of claims 9 to 12, **characterised by** the arrangement of a temperature sensor in a lid (15) of the cooking vessel, in the base of the cooking vessel and/or in the heating device.

14. System according to any one of claims 9 to 13 **characterised by** a control unit for the automatic control of the heating output of the heating device dependent upon the measured values of one of the sensors.

## Revendications

1. Procédé de commande d'un cycle de cuisson d'un produit de cuisson contenu dans un récipient de cuisson, où le bruit du cycle de cuisson est détecté par au moins un capteur acoustique et la courbe de bruit est interprétée directement pour déterminer la température du produit et/ou comme élément de sécurité, où le cycle de cuisson est surveillé en outre au moins par un capteur de température, **caractérisé en ce que** l'utilisation d'au moins deux capteurs de température espacés l'un de l'autre permet de définir une courbe de température spatiale et donc un champ de température pour l'intérieur du récipient.

2. Procédé selon la revendication 1, **caractérisé en ce que** le point d'ébullition du produit est déterminé, à l'aide de la courbe de bruit lissée dans le temps, comme le moment auquel l'on atteint un creux.

3. Procédé selon la revendication 1 ou la revendication 2, **caractérisé en ce que** l'on détermine la quantité de remplissage du récipient sur la base d'une progression déterminée pour atteindre un premier pic.

4. Procédé selon l'une quelconque des revendications précédentes, **caractérisé en ce que** l'on utilise seulement un spectre de fréquence du bruit total pour déterminer le bruit du cycle de cuisson.

5. Procédé selon la revendication 4, **caractérisé en ce que** le spectre de fréquence est compris entre 500Hz et 3000Hz.

6. Procédé selon l'une des revendications 1 à 5, **caractérisé en ce que** les températures sont déterminées dans la zone comprise entre le fond et un couvercle (15) du récipient.

7. Procédé selon l'une quelconque des revendications précédentes, caractérisé entre ce que les valeurs de mesure sont injectées dans au moins l'un des capteurs pour permettre la commande automatique de l'alimentation en d'énergie du cycle de cuisson.

8. Procédé selon la revendication 7, **caractérisé en ce que** les valeurs de mesure servent de valeur d'entrée d'une régulation à logique floue, laquelle régulation produit un signal de commande pour l'alimentation en énergie comme valeur de sortie.

9. Système composé
- d'un récipient pour recevoir un produit,
- d'un capteur acoustique pour déterminer le bruit d'un cycle de cuisson du produit
- de même qu'un dispositif de commande (11; 17) pour déterminer une température du produit et/ou pour surveiller le capteur acoustique comme élément de sécurité grâce à une interprétation directe de la courbe du bruit, **caractérisé par** au moins deux capteurs de température espacés l'un de l'autre, où le dispositif de commande (11; 17) est conçu de telle sorte que les capteurs de température définissent une courbe de température spatiale et donc un champ de température pour l'intérieur du récipient.

10. Système selon la revendication 9, **caractérisé en ce que** le dispositif de commande présente au moins un filtre de fréquence permettant de filtrer au moins un spectre de fréquence du bruit total.

11. Système selon la revendication 9 ou la revendication 10, **caractérisé en ce qu'**au moins un capteur de température est prévu dans la zone du produit et/ou du récipient pour déterminer la température.

12. Système selon l'une quelconque des revendications 9 à 11, **caractérisé par** un dispositif de chauffage pour l'alimentation en énergie thermique dans le récipient.

13. Système selon l'une quelconque des revendications 9 à 12, **caractérisé par** l'agencement d'un capteur de température dans un couvercle (15) du récipient, dans le fond du récipient et/ou dans le dispositif de chauffage.

14. Système selon l'une quelconque des revendications 9 à 13, **caractérisé par** un dispositif de régulation pour assurer la régulation de la puissance de chauffage du dispositif de chauffage en fonction des valeurs de mesure de l'un des capteurs.
